**Europäisches Patentamt**

**European Patent Office**

**Office européen des brevets**

(19)

(11) Publication number: **0 148 828**
**B1**

(12) # EUROPEAN PATENT SPECIFICATION

(45) Date of publication of patent specification: **02.12.87**

(51) Int. Cl.⁴: **B 60 G 15/00, B 60 G 11/56**

(21) Application number: **83902653.1**

(22) Date of filing: **05.07.83**

(86) International application number:
**PCT/US83/01019**

(87) International publication number:
**WO 85/00324 31.01.85 Gazette 85/03**

(54) **TRAILING ARM SUSPENSION RECESSION CONTROL.**

(43) Date of publication of application:
**24.07.85 Bulletin 85/30**

(45) Publication of the grant of the patent:
**02.12.87 Bulletin 87/49**

(84) Designated Contracting States:
**DE FR GB SE**

(56) References cited:
**DE-A-2 405 306**
**DE-A-2 460 178**
**DE-A-3 307 825**
**US-A-2 760 787**
**US-A-3 083 032**
**US-A-3 151 877**
**US-A-3 195 878**
**US-A-4 175 771**
**US-A-4 377 298**

**PATENTS ABSTRACTS OF JAPAN; vol. 8, no. 28 (M-274)1465r, February 7, 1984; & JP - A - 58 185 308 (NISSAN JIDOSHA K.K.) 29-10-1983**

**PATENTS ABSTRACTS OF JAPAN, vol. 9, no. 67 (M-366)1790r, March 27, 1985; & JP - A - 59 199 311 (MAZDA K.K.) 12-11-1984**

**J. REIMPELL: "FAHRWERKTECHNIK", VOGEL-VERLAG, WÜRZBURG 1982**

(73) Proprietor: **Ford Motor Company**
**The American Road**
**Dearborn, MI 48121 (US)**
(84) **SE**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Maimaison Cedex (FR)**
(84) **FR**

(72) Inventor: **MULLER, George, H.**
**2921 Overridge Drive**
**Ann Arbor, MI 48104 (US)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

The present invention relates generally to wheel suspension systems for motor vehicles of the kind disclosed in the US—A2760787.

It is known in the vehicle suspension arts to provide an independent wheel suspension for the front wheels of the vehicle which incorporates a pair of trailing arms mounted to a portion of the chassis of the vehicle. Exemplary of such independent wheel suspension systems is that disclosed in applicant's U.S. patent US—A—2,760,787 assigned to the assignee of the present invention. Such systems provide the advantageous vehicle design capability of providing for anti-brake dive force and attitude control of the vehicle during braking. Such systems do, however, define a low roll center for the vehicle about is longitudinal vertical plane of symmetry. This has necessitated the provision of transversely extending roll bars which detract from the true independent nature of the vehicle wheel suspension system and add to vehicle weight and cost or relatively high rate suspension springs which, while increasing roll control, detract from the riding comfort of the vehicle.

It is also known in the prior art to provide spring biasing or resilient members which effect resistance to wheel recession or which control wheel recession, that is, generally rearward wheel movement in response to the imposition of a frontal impact. Exemplary of systems which employ such devices are those disclosed in U.S. patent US—A—3,083,032 to Cuskie; US—A—3,151,877; and US—A—3,195,878 to Rosky et al. The deficiency in attempting to apply such technology to a trailing arm suspension of the type of interest here is that the wheel motion occuring during recession with such cushioning structures tends to produce toe out between the front wheels of the vehicle wheel which is disadvantageous in terms of vehicle steering capability and which increases tire wear.

According to the invention there is provided an independent wheel suspension system for the steerable wheels of a vehicle of the type wherein a resiliently telescoping strut assembly (10) is interposed between the wheel and a portion of the vehicle body at each wheel and a trailing arm member (70) is pivotally mounted to the wheel and strut assembly and is pivotally mounted to the vehicle chassis forwardly of the wheel, characterised in that the strut assembly (10) is operatively connected to a fixed length steering link (35) for affecting rotative steering movement in response to transverse movement of the link (35) with respect to the vehicle and in that means (72,74) for pivotally mounting the trailing arm member (70) to the vehicle chasses includes resilient mounting means (75) operative to permit limited rearward axial movement of the trailing arm member (70) in response to the imposition of certain rearwardly directed force on the vehicle wheel in forward motion whereby rotative toe out movement of the vehicle is resisted by the fixed length steering link (35) and rearward movement of the wheel with respect to the vehicle results in pivotal movement of the trailing arm with respect to the wheel and strut assembly during the limited axial movement of the trailing arm member (70).

The trailing arm is mounted to the vehicle chassis through a pair of pivotal connections, at least one of which is resilient which define an axis for pivotal movement of the trailing arm which is canted upwardly toward the vertical plane of symmetry of the vehicle and in which a connection from the trailing arm to a suspension strut assembly mounted between the vehicle wheel and the body is positioned at a point above and to the rear of the pivotal axis of the trailing arm. This positioning of the chassis and strut connections of the suspension system yields a trailing arm suspension system which makes use of the anti-dive teaching of U.S. patent US—A—2,760,787 while defining a roll center for the vehicle that is elevated above the low roll center defined by the system disclosed in that patent for roll resistance due to suspension geometry, thereby eliminating the need for a roll bar and/or high rate suspension springs. This advantageously arranged system is identically described and is claimed in applicant's concurrently filed application entitled "Elevated Roll Center Trailing Arm Suspension for Motor Vehicles".

Responsive to the deficiencies of the prior art, the invention suspension system of the present invention further provides resilient mounting of the outboard pivotal connection of the trailing arm to provide for measureable longitudinal and rearward movement of the wheel, thus inducing wheel recession that may occur during wheel forward rolling motion over pavement irregularities. Since connection of the trailing arm to the strut assembly is effected through a ball joint connection and steering movement of the wheel is effected through another ball joint connection to the strut assembly, the toe out tendency of the wheel during recession is counteracted by the imposition of the steering load on the strut on the one hand and the freedom of pivoting movement afforded at the steering arm ball join connection and the outboard resilient mount of the trailing arm on the other hand.

The invention will now be described further by way of example with reference to the accompanying drawings in which:

Figure 1 is a partially exploded perspective view of the strutt assembly of the suspension system of the present invention.

Figure 2 is an exploded perspective view from another angle of the strut assembly illustrating the connection of the trailing arm member to the strut assembly.

Figure 3 is a diagrammatic cross-sectional view of the suspension system of the present invention;

Figure 3A is an enlarged cross-sectional view of the resilient pivotal mounting of one end of the trailing arm;

Figure 4 is a diagrammatic side view of the invention suspension system;

Figure 5 is a diagrammatic top view of the suspension system of the present invention; and

Figure 6 is a diagrammatic presentation of the definition of the roll center of the suspension system of the present invention.

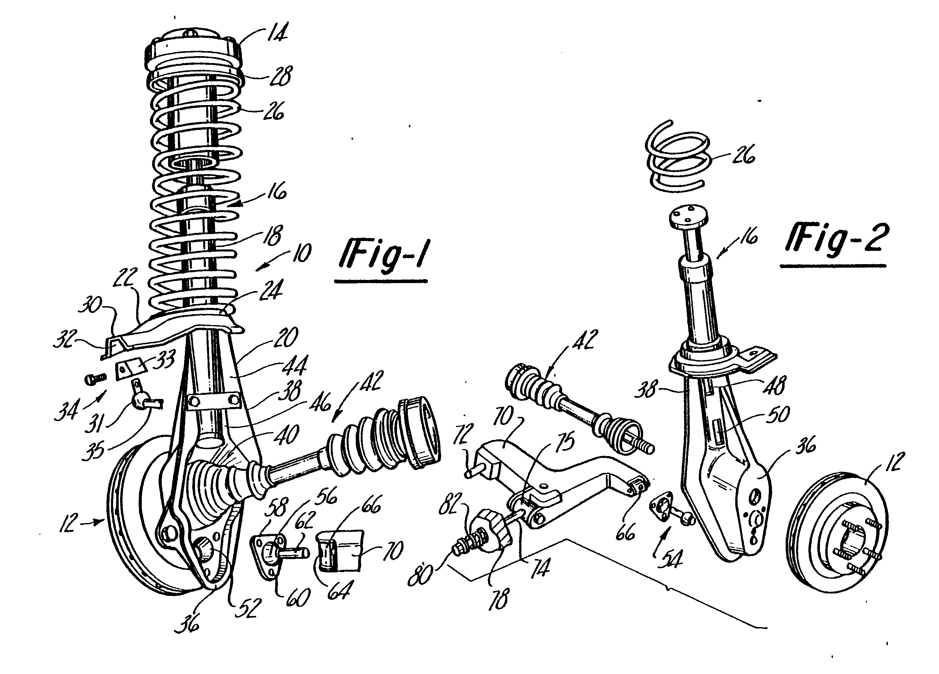

Turning now to the drawings, in particular Figures 1 and 2 thereof, the vehicle wheel suspension of the present invention is illustrated as consisting essentially of a strut assembly indicated generally at 10 that is operatively. disposed between the body (now shown), of the vehicle and a front driven wheel assembly 12 of the vehicle. It is to be understood that an essentially identical assembly is symmetrically arrayed on the other side of the vehicle. The strut assembly 10 includes an upper mounting portion 14 to provide for attachment to the vehicle body and further includes a telescoping piston and cylinder assembly 16 which may be chosen from many such assemblies available. The assembly 16 essentially includes a tubular portion 18 which is fixedly secured to a support member 20 which will be later described in greater detail. A stamped spring support member 22 is secured to the upper portion of the support portion 20 and provides a lower seat 24 for receiving a spring 26 carried in surrounding relationship about the piston and cylinder assembly 16. The upper mount portion 14 includes an upper spring seat 28 for receiving the upper end of the spring 26.

Also provided with the spring support portion 22 is an integral radially outwardly extending arm portion 30 having a pocket 32 formed therein for receiving an output portion 34 of the steering assembly of the vehicle as shown in exploded view to the left of Figure 1. This output portion 34 includes a ball stud member 31 mounted through a bushing assembly 33 in the pocket 32 for conventional attachment to the arm position 30. A fixed length link or the rod 35 operatively connects the stud member 31 to the vehicle rack and pinion steering gear system (not shown).

Considering now in more detail support portion 20, it is illustrated in Figure 1 as comprising a wheel or spindle support member 36 and a strut support member 38. The two members are arranged in abutting relationship and define a conventional mounting base for the wheel 12 providing a cavity 40 through which a drive unit such as a front wheel drive half shaft assembly 42 may be operatively connected to the wheel 12. The strut support member 38 includes an upstanding arm portion 44 defining a channel 46 for receiving the tube 18 of the piston and cylinder assembly 16. A plurality of apertures 48, as may best be seen in Figure 2, are formed through the arm portion 44 for permitting welding attachment as indicated at 50 of the strut assembly to the spindle support 20. A generally hemispherical depression 52 is formed on the inner face of the spindle support member 36 at a position below the center line of the wheel 12. A ball stud 54 having an elastomeric cushion formed about is ball end 56 is inserted into the depression 52 and retained in place by a retaining plate 58 secured by suitable fasteners (not shown) as through the apertures indicated at 60 in the plate 58. The stud portion 62 of the ball stud 54 is received through a cross hole 64 formed through a clamping bushing 66 carried by a portion of a trailing arm 70.

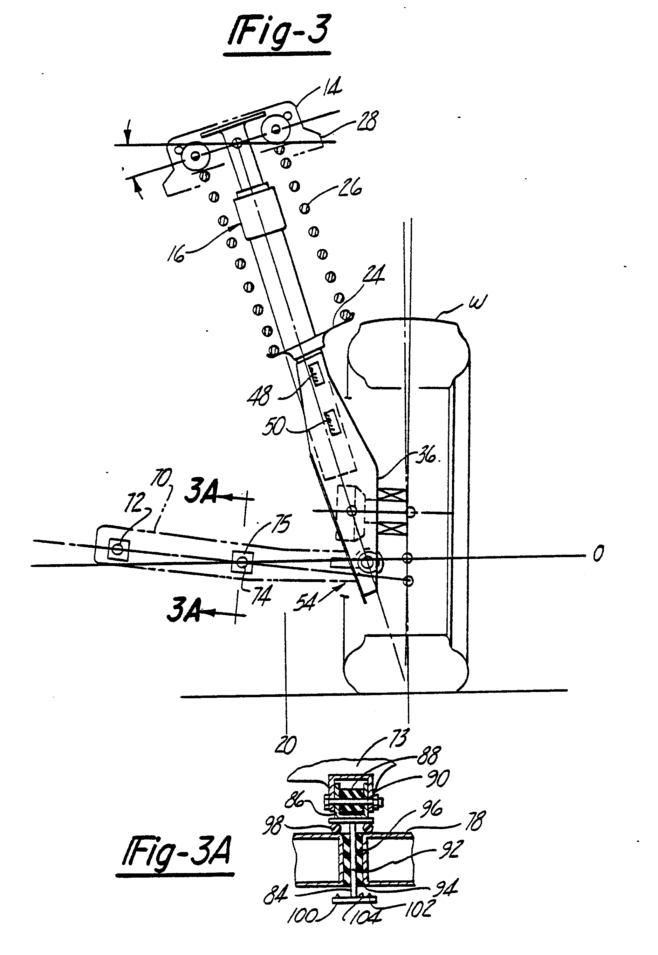

The trailing arm 70 is pivotably mounted on a generally transversely extending portion of the chassis of the vehicle by operation of two transversely spaced stud members 72, 74. It is to be understood, however, that for vehicle configurations using different structural orientations, the mountings here described as being effected at body or chassis positions may be functionally duplicated by connections effected in frames, subframes and unit body components without departing from the present teaching. As may best be seen in Figures 3, 4 and 5, the stud members 72, 74 define an axis of rotation upwardly canted toward the centre line of the vehicle and the ball stud 56 is positioned upwardly and rearwardly of that axis of rotation.

The inboard stud member 72 is of preferably a conventional pivotally mounted construction while the outboard stud member 74 is resiliently mounted. In the embodiment illustrated in Figure 2, the outboard mounting stud 74 includes a stud member carried in a resiliently mounted bushing 75 having a rotational axis transverse to the longitudinal axis of the vehicle. The stud 76 extends forwardly through a portion 78 of the vehicle chassis and includes an enlarged head portion 80 to capture a spring 82 between the stud 76 and the chassis portion 78.

A more preferred configuration for the outboard pivotal connection 74 is illustrated in Figure 3a. In this embodiment a stud member 84 includes an eye portion 86 for receiving an elastomeric bushing 88 by which the stud member 84 is resiliently mounted on a transversely extending cross-bolts 90 carried in the outboard portions 73 of the trailing arm 70. A forwardly extending generally cylindrical shaft portion 92 of the stud member 84 is resiliently mounted in another elastomeric bushing 94 which may slidingly engage the stud member 84 or may fixedly engage it in shear and which is carried in an aperture 96 formed through the chassis portion 78 of the vehicle.

Forward movement of the stud 84 is cushioned by a cushion member such as the O ring depicted at 98 and rearward movement is limited by provision of an enlargement 100 formed on the forward end of the stud portion 94. Elastomeric buttons 102 or other cushioning means such as an "O" ring may be provided on the rear face 104 of the enlargement.

Operation of the vehicle suspension system in the present invention may be better understood by reference to the schematic representations of the system depicted diagrammatically in Figures 3—6.

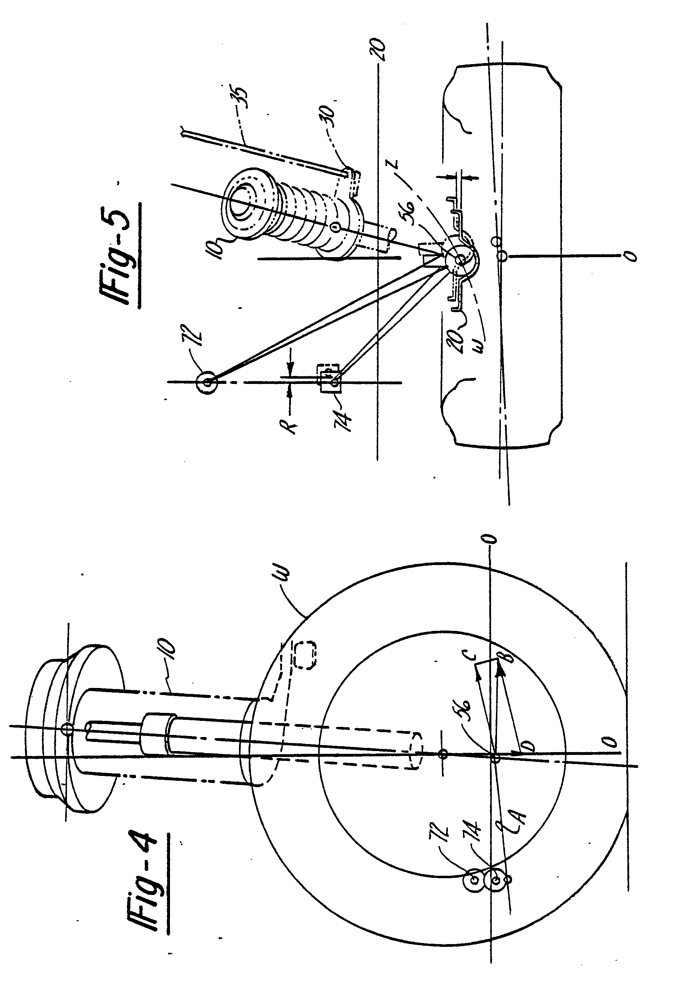

It can be seen in these Figures that the suspension system of the present invention makes use of the teaching of applicant's previously mentioned U.S. patent 2,760,787, which is incorporated herein by reference, by defining wheel suspension geometry which provides for an anti-brake feature dive. As can best be seen in Figure 4, ball stud 56, through which connection is made between the spindle support member 20 and the chassis mounted trailing arm 70, is positioned above and to the rear of trailing arm pivot connections 72, 74. Line A of Figure 4 indicates the plane of the trailing arm 70 through which vehicle braking forces must act. Therefore, upon application of a horizontal braking force on the wheel W, represented by the vector B in Figure 4, that braking force is resolved into a component C acting generally rearwardly along the trailing arm 70 and a component D acting generally downwardly through the wheel W to the ground. The reaction to the component D through the ball stud 56 tends to pivot the trailing arm 70 upwardly, opposing the tendency of the vehicle to dive in response to the horizontal weight transfer resulting from vehicle deceleration due to application of braking force.

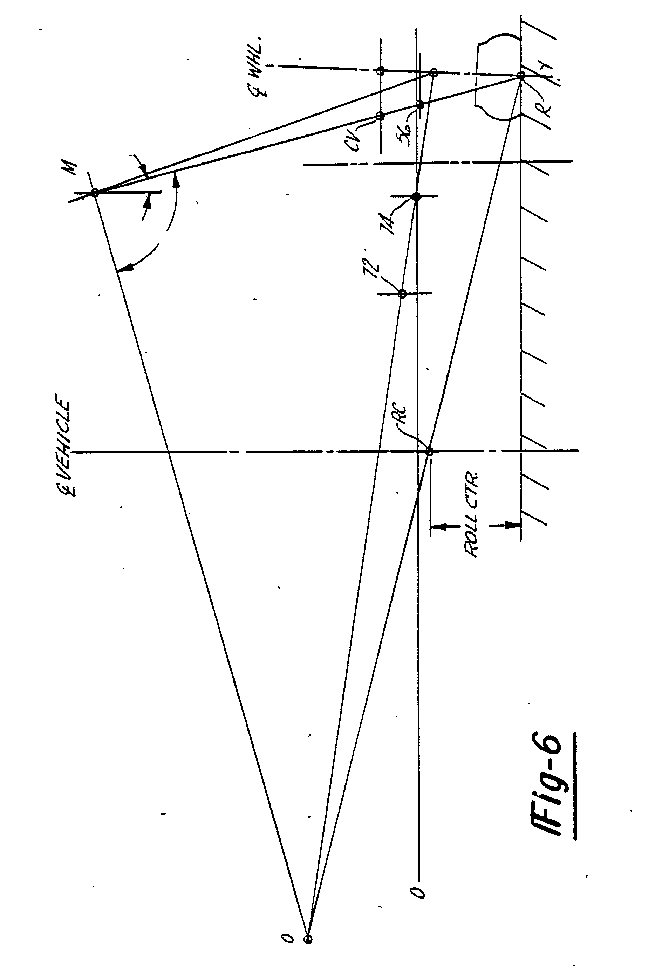

It will be noted, however, that while the general anti-dive effect above described is as provided by the prior art system of U.S. patent 2,760,787, the suspension system of the present invention differs from the prior art system in certain advantageous respects. One such difference, best illustrated in Figure 6, is the provision of an elevated roll center for the suspension system. In Figure 6, schematic point M represents the center of the body mounting portion 14 of strut assembly 10. The line X—Y therefrom extending through the drive center CV of the half shaft assembly 42, the strut steering connector 34, and the ball joint connection 56 to the point R at the center of the wheel W represents the plane in which connections between the body, wheel, strut and road are effected. As is well known in the suspension arts Point O, the instantaneous suspension center is established by projecting perpendicularly from the point M to the point of intersection with the plane defined by pivotal mounts 72, 74 of trailing arm 70 through which connection to the vehicle chassis is effected. Projecting from this point O to the point R at the intersection of the wheel center and the ground yields a roll center at intersection point RC with the vehicle center line which is elevated above the ground for this suspension system. It has been established that such elevation of the roll center can eliminate the need for a transversely extending roll bar or higher rate suspension springs or a combination of both. Thus, a truly independent front suspension can be provided at reduced cost and without sacrifice of riding comfort.

Another advantageous difference from the prior art system, best illustrated in Figures 3A and 5, is the resilient recession control afford by the configuration of the trailing arm outboard pivotal connection 74. Rearward (rightward as indicated at R in Figure 5) movement of the wheel W in response to the frontal impact is resiliently resisted by the outboard pivotal connection 74 as may be appreciated by the description of the alternative constructions of pivotal mounting 74 illustrated in Figures 2 and 3A. In Figure 5, the movement of pivotal mount 74, which is preferably accommodated by mounting inboard pivotal mount 72 for limited angular movement is diagramatically illustrated. Were the steering arm portion 30 of strut assembly not restrained from rotative movement by the fixed length steering link 35 (whose length is chosen to minimize angular variation of steering arm position with respect to the vehicle's vertical plane of symmetry as the wheel and strut move vertically during ride), this movement of trailing arm 70 would cause the wheel W to toe out as ball stud 56, and consequently the wheel W would sift acurately counterclockwise as viewed in figure 5. However, because the fixed length rod 35 does not permit rotative movement of the arm 30, the wheel W is constrained to move straight backward and inward as the spindle support 20 effectively rotates about the ball stud 56. It can be appreciated that a slight change in wheel tread path occurs during this motion. Perfect parallel displacement of the wheel W can be obtained at a given vehicle riding height by proper selection of angular position, as perceived in the plan view of Figure 5, of the theoretical steering arm axis at its connection to the fixed length steering linkage 35 and the theoretical king pin axis.

While only certain variations from the disclosed embodiment have been described or suggested, others may be possible without departing from the scope of the appended claims. Such variations include, inter alia, choosing the angle made by the steering made by the steering arm portion 30 with the vehicle's vertical longitudinal plane of symmetry to provide initially as the wheel is turned from the straight position a measure of toe-in (oversteer), and as steering movement increased a further measure of toe-out (understeer) as may be desirable for certain vehicle applications.

**Claims**

1. An independent wheel suspension system for the steerable wheels of a vehicle of the type wherein a resiliently telescoping strut assembly (10) is interposed between the wheel and a portion of the vehicle body at each wheel and a trailing arm member (70) is pivotally mounted to the wheel and strut assembly and is pivotally mounted to the vehicle chassis forwardly of the wheel, characterised in that the strut assembly (10) is operatively connected to a fixed length steering link (35) for effecting rotative steering movement in response to transverse movement of the link (35) with respect to the vehicle and in that means (72,74) for pivotally mounting the trailing arm member (70) to the vehicle chassis includes resilient mounting means (75) operative to permit limited rearward axial movement of the trailing arm member (70) in response to the imposition of certain rearwardly directed force on the vehicle wheel in forward motion whereby rotative toe out movement of the vehicle is resisted by the fixed length steering link (35) and rearward movement of the wheel with respect to the vehicle results in pivotal movement of the trailing arm with respect to the wheel and strut assembly during the limited axial movement of the trailing arm member (70).

2. An independent wheel suspension as claimed in claim 1, wherein the means for pivotally mounting the trailing arm to the vehicle chassis include a pair of transversely spaced, axially aligned pivotal connecting members (72, 74), the connecting member remotely spaced from the longitudinal vertical plane of symmetry of the vehicle being resiliently mounted by said resilient mounting means to permit certain rearward movement of the remotely spaced member.

3. An independent wheel suspension system as claimed in Claim 2, wherein the other connecting member is mounted for limited multi-directional movement in the plane of the trailing arm member.

4. An independent wheel suspension system as claimed in Claim 1, wherein the means for pivotally mounting the trailing arm member to the vehicle chassis includes and inboard connecting stud member (72) having an elongated axially extending stud portion fixed to the chassis and being resiliently pivotally mounted to the trailing arm member and an outboard connecting stud member (74) transversely spaced outwardly from the inboard connecting stud member and having an elongated axially extending stud portion securable to the vehicle chassis and being resiliently pivotally mounted to the trailing arm member by said resilient mounting means.

5. An independent wheel suspension system as claimed in Claim 4, wherein the outboard stud portion is received in a longitudinally extending aperture (94) formed in a portion of the vehicle chassis and cylindrical resilient bushing means (96) is carried in the aperture in surrounding relationship about the stud portion.

6. An independent wheel suspension system as claimed in Claim 5, wherein the cylindrical resilient bushing means is fixedly secured to engage the outboard stud portion in shear.

7. An independent wheel suspension system as claimed in any one of the preceding claims, wherein the length of the fixed length steering link is chosen to minimize angular variation of the strut assembly operative connection with respect to the vehicle vertical plane of symmetry during ride motion.

## Patentansprüche

1. Ein unabhängiges Radaufhängungssystem für die lenkbaren Räder eines Fahrzeugs in einer Ausführung, bei der einer elastisch arbeitende Federbeineinheit (10) zwischen dem Rad und einem Teil der Fahrzeugkarosserie an jedem Rad vorgesehen sowie ein Verbindungsarmelement (70) drehber am Rad und an der Federbeineinheit montiert und wiederum drehbar am Fahrzeugchassis vor dem Rad befestigt ist, dadurch gekennzeichnet, daß die Federbeineinheit (10) in wirksamer Weise mit einem längemäßig festgelegten Lenkgestänge (35) verbunden ist, um so eine Drehlenkbewegung als Reaktion auf die Querbewegung des Gestänges (35) im Verhältnis zum Fahrzeug zu bewirken, und daß die Vorrichtung (72, 74) zur drehbaren Befestigung des Verbindungselements (70) am Fahrzeugchassis eine elastische Montagevorrichtung (75) umfaßt, die in wirksamer Weise eine begrenzte, nach hinten gerichtete Axialbewegung des Verbindungsarmelements (70) als Reaktion' auf die Einwirkung einer gewissen, nach hinten gerichteten Kraft auf das Fahrzeugrad bei nach vorne verlaufender Bewegung zuläßt, wobei der Nachspurdrehbewegung des Fahrzeugs durch das längenmäßig festgelegte Lenkgestänge (35) entegegengewirkt wird und die nach hinten gerichtete Bewegung des Rads im Verhältnis zum Fahrzeug zu einer Drehbewegung des Verbindungsarms im Verhältnis zum Rad und zur Federbeineinheit während der begrenzten Axialbewegung des Verbindungsarmelements (70) fühurt.

2. Ein unabhängiges Radaufhängungssystem gemäß Anspruch 1, wobei die Vorrichtungen zur drehbaren Befestigung des Verbindungsarms am Fahrzeugchassis zwei in Querrichtung mit Abstand angeordnete, axial ausgerichtete und als Drehpunkt dienende Verbindungselemente (72, 74) umfassen, wobei das Verbindungselement, in Längsrichtung mit Abstand zur vertikalen Symmetrieachse des Fahrzeugs angeordnet, elastisch mittels der genannten Montagevorrichtung befestigt ist, im eine gewisse, nach hinten gerichtete Bewegung des mit Abstand angeordneten Elements zuzulassen.

3. Ein unabhängiges Radaufhängungssystem gemäß Anspruch 2, wobei das andere Verbindungselement entsprechend montiert ist, um eine begrenzte Bewegung in mehreren Richtungen in der Ebene des Verbindungsarmelements zuzulassen.

4. Ein unabhängiges Radaufhängungssystem gemäß Anspruch 1, wobei die Vorrichtung zur drehbaren Befestigung des Verbindungsarmelements am Fahrzeugchassis ein innenliegendes, verbindendes Bolzenelement (72) umfaßt, das einen länglichen, axial verlaufenden Bolzenabschnitt aufweist, der am Chassis befestigt und elastisch in drehbarer Ausfertigung am Verbindungsarmelement montiert ist, sowie ein außenliegendes, verbindendes Bolzenelement (74) aufweist, das in Querrichtung nach außen zum innenliegenden, verbindenden Bolzenelement mit Abstand angeordnet ist und einen länglichen, axial verlaufenden Bolzenabschnitt umfaßt, der sich am Fahrzeugchassis befestigen 1äßt, wobei dessen Befestigung mittels der genannten elestischen Montagevorrichtung am Verbindungsarmelement elastisch in drehbarer Ausfertigung vorgesehen ist.

5. Ein unabhängiges Radaufhängungssystem gemäß Anspruch 4, wobei der außenliegende Bolzenabschnitt von einer in Längsrichtung verlaufenden Öffnung (94) aufgenommen wird, die in einem Abschnitt des Fahrzeugchassis ausgebildet ist, und wobei eine zylindrische elastische Hülsenvorrichtung (96) in der Öffnung mit einer den genannten Bolzenabschnitt umgebenden Form vorhanden ist.

6. Ein unabhängiges Radaufhängungssystem gemäß Anspruch 5, wobei die zylindrische elastische Hülsenvorrichtung so fest gesichert ist, daß sie mit dem außenliegenden Bolzenabschnitt in Scherkrafteingriff steht.

7. Ein unabhängiges Radaufhängungssystem gemäß irgendeinem der vorstehenden Ansprüche, wobei die Länge des längenmäßig festgelegten Lenkgestänges so festgelegt ist, daß eine Winkelveränderung der wirksamen Verbindung des Federbeins im Verhältnis zur vertikalen Symmetrieachse des Fahzeugs während der Fahrtbewegung auf ein Mindestmaß beschränkt bleibt.

## Revendications

1. Système de suspension pour roue indépendante directrice d'un véhicle due type où pour chaque roue un emsemble support télescopique élastique (10) èst placé entre la roue et une partie de la structure du véhicule et un élément de bras tiré (70) est monté à basculement sur la roue et l'ensemble support ainsi que sur la structure du véhicule à l'avant de la roue, caractérisé en ce que l'ensemble support (10) est relié de manière active à une bielle de direction (35) de longueur constante, pour communiquer un déplacement directif tournant en réponse à un déplacement transversal de la bielle (35) par rapport au véhicule et en ce que des moyens (72, 74) pour monter à basculement l'élément de bras tiré (70) sur la structure du véhicule comportent des moyens de montage élastique (75) qui opèrent pour permettre un recul axial limité de l'élément de bras tiré (70) en réponse à une certaine force dirigée vers l'arrière exercée sur la roue du véhicule lorsque celui-ci avance de sorte qu'une ouverture ou pincement négatif par rotation est empêchée par la bielle (35) de direction de longueur constante, et qu'un recul de la roue par rapport au véhicule engendre une rotation du brass tiré par rapport à la roue et à l'ensemble support pendant le déplacement axial limité de l'élément de bras tiré (70).

2. Système de suspension selon la revendication 1, caractérisé en ce que les moyens pour monter à basculement le bras tiré sur la structure du véhicule comportent un couple d'éléments (72, 74) de liaison à basculement alignés axialement et espacés l'un de l'autre transversalement, dont l'élément le plus éloigné du plan de symétrie verticl longitudinal du véhicule est monté élastiquement à l'aide de ces moyens de montage élastiques pour lui permettre un certain recule éloigné.

3. Système de suspension selon la revendication 2, caractérisé en ce que l'autre élément de liaison est monté un déplacement multi-directional limité dans le plan de l'élément de bras tiré.

4. Système de suspension selon la revendication 1, caractérisé en ce que les moyens pour monter à basculement l'élément de bras tiré sur la structure du véhicule comportent un élément de liaison intérieur (72) en tenon, présentant une partie de tenon allongée axialement, fixée à la structure et montée élastiquement à basculement à l'élément de bras tiré et un élément de liaison extérieur (74) entenon espacé transversalment vers l'extétrieur de l'élément de liaison intérieur en tenon et présentant une partie de tenon allongée axialement qui peut être fixée à la structure du véhicule et qui est monté élastiquement à basculement à l'élément de bras tiré par ces moyens de montage élastiques.

5. Système de suspension selon la revendication 4, caractérisé en ce que la partie en tenon extérieur est logée dans une ouverture longitudinale (96) ménagée dans une partie de la structure du véhicule et en ce que des moyens cylindriques formant coussinet élastique (94) sont placés dans l'ouverture de manière à entourer la partie en tenon.

6. Système de suspension selon la revendication 5, caractérisé en ce que les moyens cylindriques formant coussinet élastique sont disposés de manière fixe pour recevoir à cisaillement la partie en tenon extérieur.

7. Système de suspension selon l'une quelconque des revendications précédentes, caractérisé en ce que la longueur de la bielle de direction de longeur constante est choisie de manière à minimiser la variation angulaire de la liaison active de l'ensemble support part rapport au plan de symétrie vertical du véhicule lors d'une débatement.

_Fig-1_

_Fig-2_

0 148 828

## Fig-3

## Fig-3A

Fig-5

Fig-4

Fig-6